# EUROPEAN PATENT APPLICATION

(11) **EP 1 148 711 A1**
(43) Date of publication of application: **24.10.2001**
(21) Application number: 01303592.8
(22) Date of filing: 19.04.2001
(51) Int. Cl.: H04N 1/56

(54) **Adaptive mode-switching method for scanning color and grayscale data**

(30) Priority: 20.04.2000 US 552850
(71) Applicant: Hewlett-Packard Company, Palo Alto, CA 94304 (US)
(72) Inventor: Crane, Randy T., Fort Collins, CO 80525 (US)
(74) Representative: Colgan, Stephen James

(57) **Abstract**

A circuit or method for use with or within an image capture device, such as a scanner, that calculates the color content of the image, as the color content varies throughout the image. For areas of the image where the color content is below a programmable threshold, the circuit or method automatically switches to grayscale mode during image capture. For areas of the image where the color content is above the programmable threshold, the circuit or method automatically switches back to color mode during image capture. For areas of the image containing text or line drawing data, the circuit or method automatically switches to 1-bit-per-pixel line drawing mode during image capture.

## Description

### FIELD OF THE INVENTION

This invention relates generally to the field of electronic image capture and more particularly to the selective capture and processing of color, grayscale, and line drawing image data within a single image.

### BACKGROUND OF THE INVENTION

In the field of electronic image capture, such as by a scanner, there are several modes of operation. For example, a scanner may capture images in full color mode or in a gray scale mode. When an image is captured in full color, the data may be much larger than the data generated by capturing the same image in a gray scale mode. Larger data files require more time for processing and transferring the image data. In some applications the larger data files will also require more memory in the image processing device and this inherently limits the size of image that may be processed. If a gray scale capture is used where possible, the resulting data file may be about one third the size of a corresponding full color image capture data file. Since the resulting data file may be one third the size of the color data file, it may be possible to process and transfer much larger images in a given transfer time, within the memory limitations of the device.

Many current image capture devices allow the user to choose between several modes of operation such as 24-bits-per-pixel color, 8-bits-per-pixel color, 8-bits-per-pixel gray scale, 4-bits-per-pixel gray scale, or 1-bit-per-pixel line drawing mode. Typically, the mode of operation is selected prior to the actual image capture. However, some devices, such as digital cameras, may capture data only in one mode, such as 24-bits-per-pixel color, and then require later conversion to a different mode, if desired.

Some image sources may contain a mixture of color data, gray scale data, and line drawing or text data. In this case, typically the entire image will be captured in color, even though other portions of the image may contain no color information. Processing of the image could be sped up if the gray scale portion could be recognized and stored as gray scale data instead of full color data. Processing of the image could be further accelerated if the text or line drawing portions could be recognized and stored as 1-bit-per-pixel binary data instead of full color or gray scale data.

There is a need in the art for image capture devices that automatically detect the differences between color, gray scale, and text or line drawing images. Further, there is a need in the art for image capture devices that automatically switch between color, gray scale, and text or line drawing capture modes on the fly during the image capture process. This could relieve the user from the chore of deciding which capture mode to use and would allow a combination of modes within a single image without input from the user.

### SUMMARY OF THE INVENTION

Within an image capture device, such as a scanner, a circuit is included that monitors the color content of the image as it is captured. This adaptive mode-switching method allows the device to automatically switch between full color, gray scale, and possibly line drawing modes. When the color content drops below a programmable threshold, the device automatically switches to gray scale mode. The color content is further monitored and if the color content rises above the programmable threshold, the device automatically switches back to color mode. Further, if a portion of the image contains only text or black and white line drawings, the device automatically switches to a 1-bit-per-pixel line drawing mode.

The color content may be determined in a number of ways. One embodiment of this invention converts the incoming color data to a color space including saturation and intensity contents. The saturation content of the incoming color data is accumulated for a block of data and compared against a programmable threshold. If the saturation is greater than the programmable threshold, the device passes the full color data to the downstream image processing pipeline along with a control signal specifying the data as full color data. If the saturation is less than the programmable threshold, the device passes the intensity content of the incoming color data to the downstream image-processing pipeline along with a control signal specifying the data as gray scale. This is possible since the intensity content of the incoming color image data is the gray scale content of the input data.

Another embodiment of this invention generates a saturation-per-pixel value averaged over a programmable number of pixels. The input data is converted to a color space including saturation and intensity data (assuming the input data is not already in such a color space), and the saturation content of the incoming color image data is accumulated. As each pixel of data is accumulated a pixel counter is incremented. The content of the saturation accumulator is divided by the content of the pixel counter to produce a saturation-per-pixel value. This saturation-per-pixel is compared to a programmable threshold. If the saturation-per-pixel value is greater than the programmable threshold, the full color image data is passed to the downstream image-processing pipeline along with a color mode signal specifying the data as color image data. If the saturation-per-pixel value is less than the programmable threshold, the intensity content of the incoming color image data is passed to the downstream image processing pipeline along with a color mode signal specifying the data as gray scale data. This is possible since the intensity content of the incoming color image data is the gray scale content of the input data.

Yet another embodiment of this invention maintains a histogram of intensity data, and when the histogram shows a bimodal distribution, automatically switches the device into a 1-bit-per-pixel line drawing mode. This functionality may be combined with either of the embodiments described above, or may be used alone. For example, a black and white only device may simply need to switch between gray scale and 1-bit-per-pixel line drawing modes.

Other aspects and advantages of the present invention will become apparent from the following detailed description, taken in conjunction with the accompanying drawings, illustrating by way of example the principles of the invention.

### BRIEF DESCRIPTION OF THE DRAWINGS

FIG. 1 is graphical representation of the hue, saturation, intensity (HSI) color space.

FIG. 2 is a block diagram of a representative embodiment of an adaptive mode-switching method.

FIG. 3 is a block diagram of another representative embodiment of an adaptive mode-switching method.

FIG. 4 is a block diagram of yet another representative embodiment of an adaptive mode-switching method.

FIG. 5 is a flowchart of a representative embodiment of an adaptive mode-switching method.

FIG. 6 is a flowchart of another representative embodiment of an adaptive mode-switching method.

FIG. 7 is a flowchart of yet another representative embodiment of an adaptive mode-switching method.

### DETAILED DESCRIPTION OF THE PREFERRED EMBODIMENTS

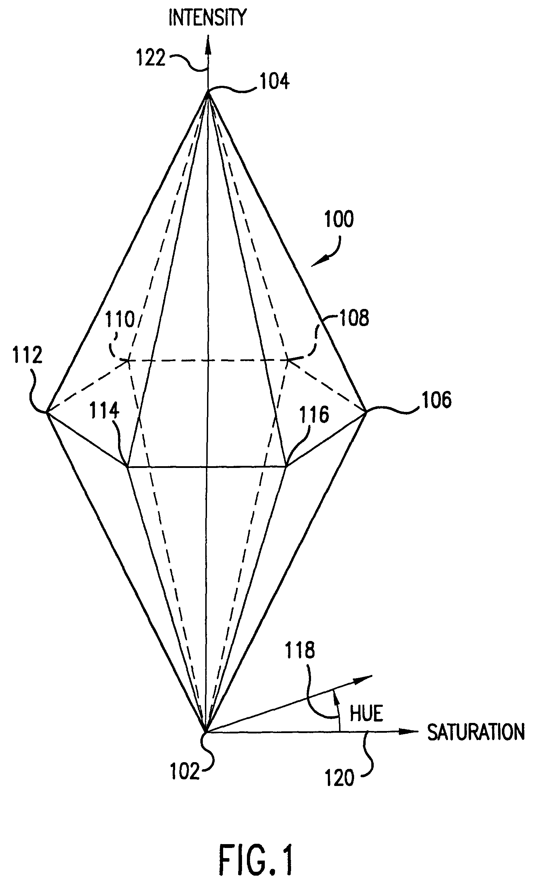

FIG. 1 is a graphical representation of the hue, saturation, intensity (HSI) color space. Hue describes the most basic attribute of color, for example, pure red, pure green, or pure blue. Saturation is description of the portion of pure chromatic color in the total color. Saturation may be described as how deep (highly saturated) or how faded (lightly saturated) a color is. Intensity is a color-neutral attribute that describes the relative brightness of the color.

Hue, saturation, intensity color space is commonly represented by a double hexcone model such as that shown in FIG. 1. The surface of this double hexcone model represents maximum saturation (S=1). This model uses a polar coordinate system. In the example shown in FIG. 1, the vertical axis represents intensity, the hue is represented by the angle about the intensity axis, and the saturation is represented by the distance from the intensity axis. The intensity axis **122** of the model is shown in this example as the vertical axis, where minimum intensity (I=0) is at the axis origin **102** of the model and maximum intensity (I=1) is at the point **104** of the model where the surface of the hexcone intersects the intensity axis **122** furthest from the origin and the intensity is defined to be 1. Minimum saturation (S=0) is represented by all points on the intensity axis **122** of the model. Saturation is represented by the distance **120** from the vertical (intensity) axis **122** to the point being considered.

Pure black is represented at the origin **102** of the model where intensity is equal to 0. Pure white is represented at point **104** of the model where intensity is equal to 1. At these two points, the saturation and hue are meaningless since the surface of the double hexcone meets the vertical axis at these points. In this model all the points where saturation is equal to 0 represent a gray scale color space. These points form the vertical line representing the intensity axis.

Hue is represented on this model by the angle **118** about the intensity axis **122.** An angle of 0° about the vertical axis represents the color red. Pure red is represented by point **106** where the hue is 0°, the saturation is 1, and the intensity is 0.5. Pure yellow is represented by point **108** where the hue is 60°, the saturation is 1, and the intensity is 0.5. Pure green is represented by point **110** where the hue is 120°, the saturation is 1, and the intensity is 0.5. Pure cyan is represented by point **112** where the hue is 180°, the saturation is 1, and the intensity is 0.5. Pure blue is represented by point **114** where the hue is 240°, the saturation is 1, and the intensity is 0.5. Pure magenta is represented by point **116** where the hue is 300°, the saturation is 1, and the intensity is 0.5.

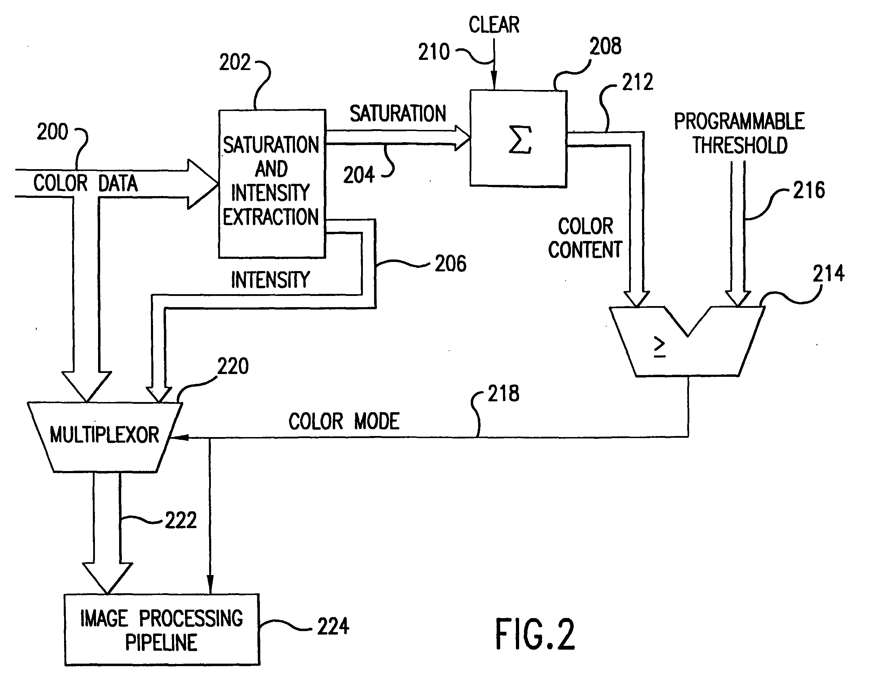

FIG. 2 is block diagram of a representative embodiment of an adaptive mode-switching method. Color image data **200** enters the system at the input to the saturation and intensity extraction block **202.** The color image data may consist of RGB (Red/Green/Blue) data or other possible color models such as CMY (Cyan/Magenta/Yellow), HLS (Hue/Lightness/Saturation), HSI (Hue/Saturation/Intensity), or YIQ (intensitY/In-phase/Quadrature) as used in the National Television System Committee (NTSC) system. If the incoming color image data is in a format where the saturation and intensity data already exist as separate sub-groups, the extraction block **202** simply splits apart the saturation and intensity data. Otherwise, the saturation and intensity extraction block **202** converts the color image data to a color space containing saturation and intensity data, such as the HSI (Hue/Saturation/Intensity) color space, using methods well known in the industry. (See, for example, a RGB to HSI converter in Fig. 13.33 from Foley, James D., et. al., *Computer Graphics: Principles and Practice,* 2nd ed., 1996, Addison-Wesley Publishing Company, Inc.) The saturation **204** output of the extraction block **202** is sent to the input of an accumulator **208.** The intensity **206** portion of the color image data is sent to a multiplexor **220** that will be discussed below. The accumulator **208** also has a clear input **210** to reset the accumulator **208** at the start of each group of color image data **200.** The accumulator **208** sums the color content **212** of the current group of color image data **200.** This color content **212** is compared against a programmable threshold **216** by a comparator **214.** The output of the comparator **214** is the color mode **218,** and it drives the select input of the multiplexor **220.** When the current group of image data **200** contains substantially color image data, the color content **212** is greater than the programmable threshold **216,** and the multiplexor **220** is controlled such that the output **222** of multiplexor **220** is the color data **200.** This color data is then sent to the image processing pipeline **224.** In the case where the current group of image data **200** contains substantially gray scale image data, the color content **212** is below the programmable threshold **216,** so the multiplexor **220** is controlled such that the output **222** of multiplexor **220** is the intensity data **206.** This intensity data is then sent to the image processing pipeline **224.** Since the current group of data consists of gray scale data, the intensity portion of the data is all that is needed to properly display the data. The color mode **218** is also sent to the image-processing pipeline **224** so it will know whether to expect color data or gray scale data.

Note that this embodiment of the invention may be constructed in hardware, firmware, or as software in any given device.

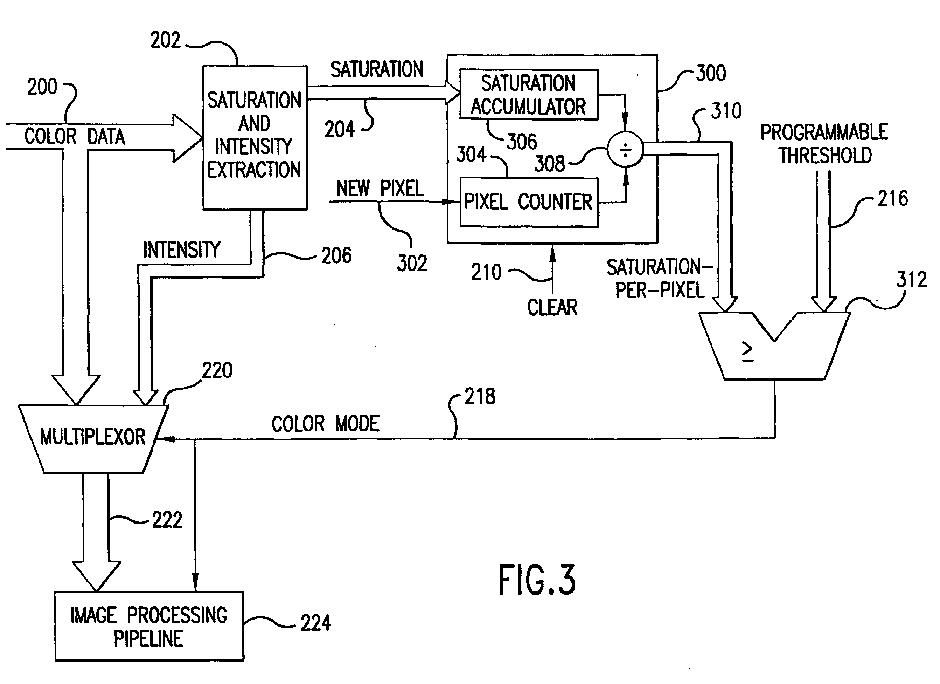

FIG. 3 is a block diagram of another representative embodiment of an adaptive mode-switching method. Color image data **200** enters the system at the input to the saturation and intensity extraction block **202.** The color image data may consist of RGB (Red/Green/Blue) data or other possible color models, such as CMY (Cyan/Magenta/Yellow), HLS (Hue/Lightness/Saturation), HSI (Hue/Saturation/Intensity), or YIQ (intensitY/In-phase/Quadrature) as used in the National Television System Committee (NTSC) system. If the incoming color image data is in a format where the saturation and intensity data already exist as separate sub-groups, the extraction block **202** simply splits apart the saturation and intensity data. Otherwise, the saturation and intensity extraction block **202** converts the color image data to a color space containing saturation and intensity data, such as the HSI (Hue/Saturation/Intensity) color space, using methods well known in the industry. (See, for example, an RGB to HSI converter in Fig. 13.33 from Foley, James D., et. al., *Computer Graphics: Principles and Practice,* 2nd ed., 1996, Addison-Wesley Publishing Company, Inc.) The saturation **204** output of the extraction block **202** is sent to the input of a saturation calculator **300.** The intensity **206** portion of the incoming color image data is sent to a multiplexor **220** that will be discussed below. The saturation calculator **300** also has a clear input **210** to reset the saturation accumulator **306** and the pixel counter **304** at the start of each group of color image data **200.** A new pixel **302** input to the saturation calculator **300** increments the pixel counter **304** as the saturation data for each pixel is added in the saturation accumulator **306.** The accumulated saturation data is divided by the number of pixels in a divider **308** to produce a saturation-per-pixel output **310.** The saturation-per-pixel output **310** of the saturation calculator **300** is the saturation content of the current group of color image data **200.** This saturation-per-pixel output **310** is compared against a programmable threshold **216** by a comparator **312.** The output of the comparator **312** is the color mode **218,** and it drives the select input of the multiplexor 220. When the current group of image data **200** contains substantially color image data, the saturation-per-pixel output **310** is greater than the programmable threshold **216,** so the multiplexor **220** is controlled such that the output **222** of the multiplexor **220** is the color image data **200.** This color image data is then sent to the image processing pipeline **224.** In the case where the current group of image data **200** contains substantially gray scale image data, the saturation-per-pixel output **310** is below the programmable threshold **216,** so the multiplexor **220** is controlled such that the output **222** of the multiplexor **220** is the intensity data **206.** This intensity data is then sent to the image processing pipeline **224.** Since the current group of data consists of gray scale data, the intensity portion of the data is all that is needed to properly display the data. The color mode **218** is also sent to the image-processing pipeline **224** so it will know whether to expect color data or gray scale data.

Note that this embodiment of the invention may be constructed in hardware, firmware, or as software in any given device.

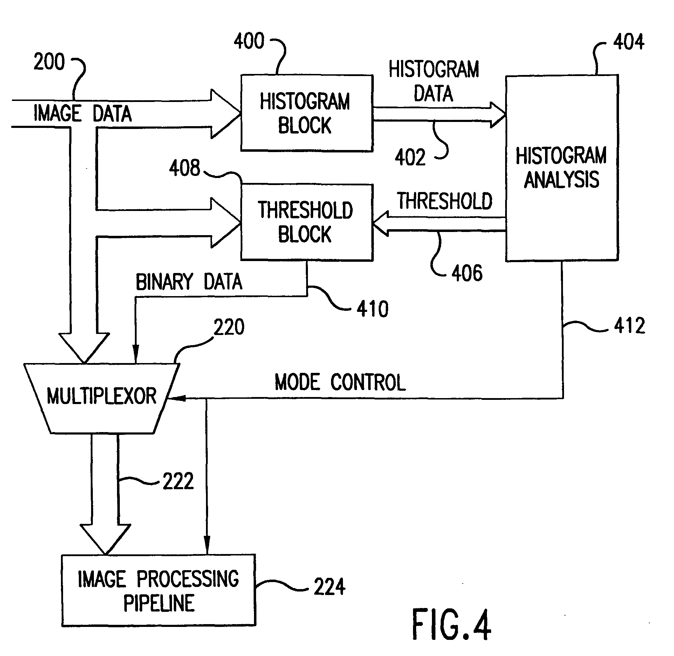

FIG. 4 is a block diagram of yet another representative embodiment of an adaptive mode-switching method. In this embodiment, the mode-switching circuitry is designed to detect portions of an image containing line drawings or text. The incoming image data **200** may be either color or gray scale image data. This image data **200** is received by a histogram block **400,** a threshold block **408,** and a multiplexor **220.** Each of these blocks will be described in detail. The histogram block **400,** maintains a histogram of the intensity portion of the incoming image data **200.** In cases of image data containing text or line drawings the resulting histogram will show a bimodal distribution. The histogram analysis block **404** performs this analysis of the histogram it receives from the histogram block **400.** If a bimodal distribution is detected, the histogram analysis block **404** determines the intensity at the minimum between the two lobes of the bimodal distribution. This intensity is the threshold **406** below which a pixel is considered black and above which a pixel is considered white. The threshold **406** is sent to the threshold block **408** where the intensity portion of the incoming image data **200** is compared to the threshold **406.** If the intensity of the incoming image data **200** is below the threshold **406** a binary data bit **410** representing a black pixel is output. If the intensity of the incoming image data **200** is above the threshold **406** a binary data bit **410** representing a white pixel is output. This binary data **410** is an input to the multiplexor **220** in addition to the incoming image data **200.** The histogram analysis block **404** also outputs a mode control signal **412** that is used to control the multiplexor **220** and is also sent to the downstream image processing pipeline **224.** The mode control signal **412** drives the select line of the multiplexor **220** to determine whether the full image data **200** is to be passed through the multiplexor **220** to its output **222,** or if the binary data **410** is to be passed through to the multiplexor output **222.** The output **222** of the multiplexor **220** is then sent to the downstream image processing pipeline **224.**

Note that this embodiment of the invention may be constructed in hardware, firmware, or as software in any given device.

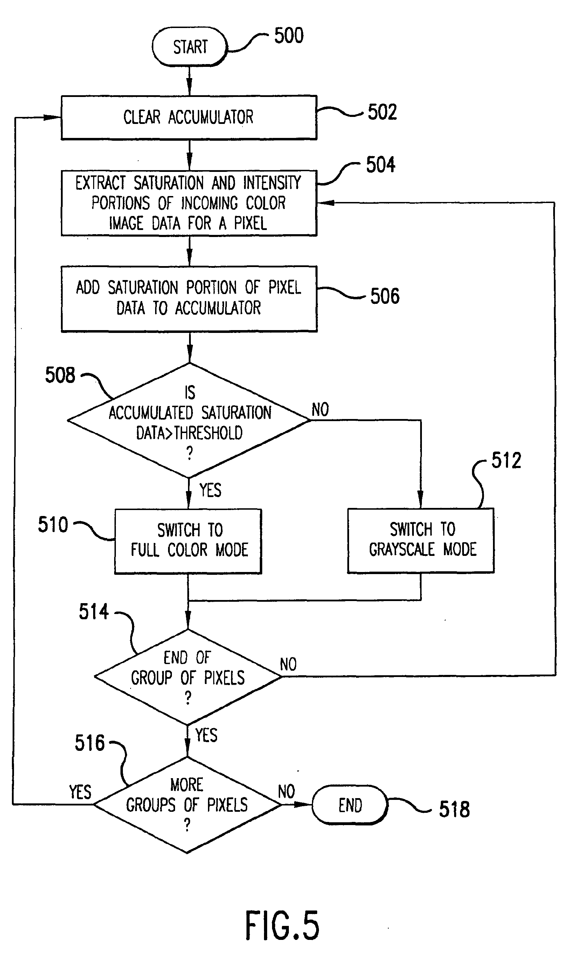

FIG. 5 is a flowchart of a representative embodiment of an adaptive mode-switching method. The method starts in a step **500.** In a step **502** an accumulator is cleared to begin receiving data from a new group of pixels. In this embodiment, a group of pixels may consist of, for example, a set number of pixels, a single image raster line, a segment of a single image raster line, or a rectangular block of pixels. Other sizes and shapes of groups of pixels may be implemented within the scope of this invention. In a step **504,** the saturation and intensity portions of the incoming color image data are extracted for a pixel. In a step **506,** the saturation portion of the incoming color image data is added to the contents of the accumulator. After the accumulation is performed, a decision step **508** is reached. In a decision step **508,** if the accumulated saturation data is greater than a threshold, the device is switched to full color mode in a step **510.** If the device is already in full color mode, step **510** leaves the device in full color mode. If the accumulated saturation data is not greater than a threshold, the device is switched to grayscale mode in a step 512. If the device is already in grayscale mode, step **512** leaves the device in gray scale mode. After the mode is switched, a decision step **514** is reached. In a decision step **514,** if there are more pixels to process in a group, the method returns to step **504.** In a decision step **516,** if there are more groups of pixels in the image, control is returned to step **502** for a new group of pixels. If the image is completed, the method ends in a step **518.**

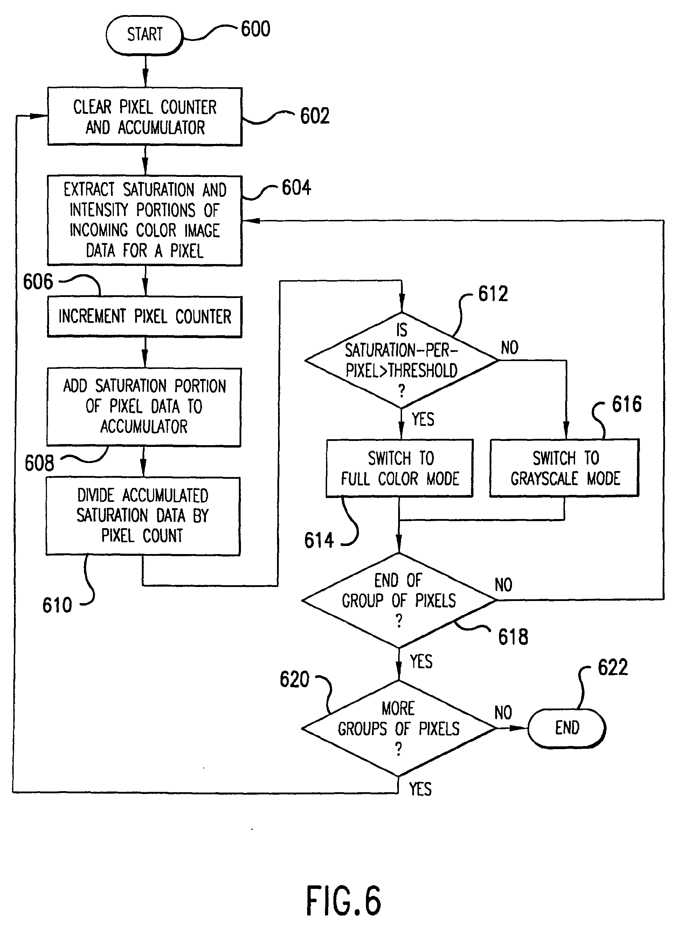

FIG. 6 is a flowchart of another representative embodiment of an adaptive mode-switching method. The method starts in a step **600.** In a step **602,** a pixel counter and accumulator are cleared to begin receiving data from a new group of pixels. In this embodiment, a group of pixels may consist of, for example, a set number of pixels, a single image raster line, a segment of a single image raster line, or a rectangular block of pixels. Other sizes and shapes of groups of pixels may be implemented within the scope of this invention. In a step **604,** the saturation and intensity portions of the incoming color image data for a pixel are extracted. In a step **606**, the pixel counter is incremented. In a step **608,** the saturation portion of the incoming color image data is added to the contents of the accumulator. In a step **610,** the contents of the accumulator are divided by the contents of the pixel counter to generate a saturation-per-pixel number. In a decision step **612,** if the saturation-per-pixel is greater than a threshold, the device is switched to full color mode in a step **614.** If the device is already in full color mode, step **614** leaves the device in full color mode. If the saturation-per-pixel is not greater than a threshold, the device is switched to grayscale mode in a step **616.** If the device is already in grayscale mode, step **616** leaves the device in grayscale mode. In a decision step **618,** if there are more pixels to process in the current group of pixels, control returns to step **604** for the next pixel. If there are no more pixels to process in the current group, a decision step 620 is reached. In a decision step **620,** if there are more groups of pixels in the image, control is returned to step **602** for the next group of pixels. If there are no more groups of pixels in the image, the image is completed, and the method ends in a step **622.**

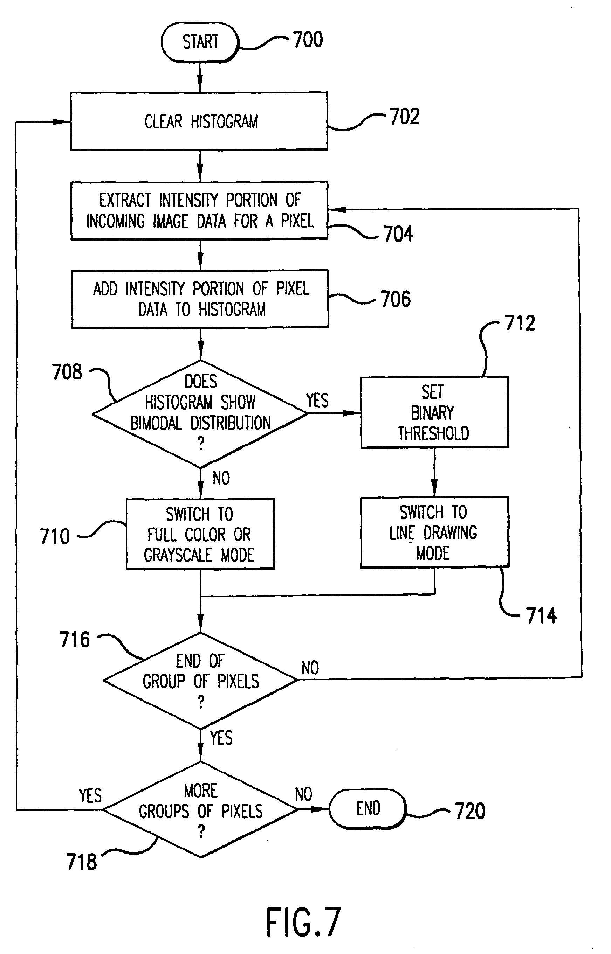

FIG. 7 is a flowchart of yet another representative embodiment of an adaptive mode-switching method. The method starts in a step **700.** In a step **702,** the histogram is cleared to begin receiving data from a new group of pixels. In this embodiment, a group of pixels may consist of, for example, a set number of pixels, a single image raster line, a segment of a single image raster line, or a rectangular block of pixels. Other sizes and shapes of groups of pixels may be implemented within the scope of this invention. In a step **704,** the intensity portion of the incoming image data for a pixel is extracted. In a step **706,** the intensity data is added to the histogram. After the histogram is updated, a decision step **708** is reached. In a decision step **708,** if the histogram does not show bimodal distribution the device is switched to full color or grayscale mode in a step **710.** If the device is already in full color or grayscale mode, step **710** leaves the device in this mode. If the histogram shows bimodal distribution, a binary threshold is set in a step **712,** and the device is switched into line drawing (1-bit-per-pixel) mode in a step **714.** If the device is already in line drawing (1-bit-per-pixel) mode, step **714** leaves the device in this mode. In a decision step **716,** if there are more pixels to process in the current group, control is returned to step **704.** If there are no more pixels to process in the current group a decision step **718** is reached. In a decision step **718,** if there are more groups of pixels to process in the image, control is returned to step **702** to start processing the next group of pixels. If the image has been completed, the method ends in a step **720.**

The foregoing description of the present invention has been presented for purposes of illustration and description. It is not intended to be exhaustive or to limit the invention to the precise form disclosed, and other modifications and variations may be possible in light of the above teachings. The embodiments were chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A circuit comprising:
an accumulator **208** that accumulates a saturation portion **204** of incoming color image data **200;** and
a multiplexor **220** that receives said color image data **200** and outputs said color image data **200** when said accumulator output **212** is greater than a programmable threshold **216,** and outputs an intensity portion **206** of said color image data **200** when said accumulator output is less than said programmable threshold **216.**

2. A circuit comprising:
a saturation calculator **300** that calculates saturation-per-pixel from a saturation portion **204** of incoming color image data **200;** and
a multiplexor **220** that receives said color image data **200** and outputs said color image data **200** when said saturation-per-pixel **310** is greater than a programmable threshold **216,** and outputs an intensity portion **206** of said color image data **200** when said saturation-per-pixel **310** is less than said programmable threshold **216.**

3. A circuit comprising:
an accumulator **208** that accumulates a saturation portion **204** of incoming color image data **200;** and
a multiplexor **220** that receives said color image data **200** and outputs either said color image data **200** or an intensity portion **206** of said color image data **200;** wherein said color image data **200** is output when said accumulator output **212** is greater than a programmable threshold **216,** and said intensity portion **206** of said color image data **200** is output when said accumulator output **212** is less than said programmable threshold **216.**

4. A circuit comprising:
a saturation calculator **300** that calculates saturation-per-pixel **310** from a saturation portion **204** of incoming color image data **200;** and
a multiplexor **220** that receives said color image data **200** and outputs said color image data **200** when said saturation-per-pixel **310** is greater than a programmable threshold **216,** and outputs an intensity portion **206** of said color image data **200** when said saturation-per-pixel **310** is less than said programmable threshold **216.**

5. A circuit comprising:
a histogram block **400** that receives incoming image data **200** and creates a histogram **402** of the intensity portion of the image data;
a histogram analysis block **404** that receives histogram data from said histogram block **400,** calculates an intensity threshold **406** from said histogram data **402,** and asserts a mode control signal **412** if said histogram data **402** has a bimodal distribution;
a threshold block **408** that receives said incoming image data **200** and said intensity threshold **406,** and converts said incoming image data **200** to a 1-bit-per-pixel format using said intensity threshold **406;** and
a multiplexor **220** that receives said incoming image data **200** and said **1**-bit-per-pixel data **410,** outputs said 1-bit-per-pixel data **410** when said mode control signal **412** is asserted, and outputs said incoming image data **200** when said mode control signal **412** is not asserted.

6. A method for scanning images comprising the steps of:
accumulating **506** a saturation portion **204** of incoming color image data **200;**
outputting said color image data **200** when said accumulated saturation data **212** is greater than a programmable threshold **216;** and
outputting an intensity portion **206** of said color image data **200** when said accumulated saturation data **212** is less than said programmable threshold **216.**

7. A method for scanning images comprising the steps of:
calculating **610** a saturation-per-pixel value **310** from a saturation portion **204** of incoming color image data **200;**
outputting said color image data **200** when said saturation-per-pixel value **310** is greater than a programmable threshold **216;** and
outputting an intensity portion **206** of said color image data **200** when said saturation-per-pixel value **310** is less than said programmable threshold **216.**

8. A method for scanning images comprising the steps of:
accumulating **608** a saturation portion **204** of incoming color image data **200;**
outputting said color image data **200** when said accumulated saturation data **212** is greater than a programmable threshold **216;** and
outputting an intensity portion **206** of said color image data **200** when said accumulated saturation data **212** is less than said programmable threshold **216.**

9. A method for scanning images comprising the steps of:
calculating a saturation-per-pixel value **310** from a saturation portion **204** of incoming color image data **200;**
outputting said color image data **200** when said saturation-per-pixel value **310** is greater than a programmable threshold **216;** and
outputting an intensity portion **206** of said color image data **200** when said saturation-per-pixel value **310** is less than said programmable threshold **216.**

10. A method for scanning images comprising the steps of:
Creating **706** a histogram of the intensity portion of incoming image data **200;** asserting a mode control signal **412** if said histogram data **402** has a bimodal distribution;
calculating **712** an intensity threshold **406** from said histogram data **402;** converting said incoming image data to a 1-bit-per-pixel format using said intensity threshold **406;**
outputting said incoming image data **200** when said mode control signal **412** is not asserted; and
outputting said 1-bit-per-pixel image data **410** when said mode control signal **412** is asserted.
